(19) Europäisches Patentamt
European Patent Office
Office européen des brevets

(11) **EP 3 312 480 B1**

(12) **EUROPÄISCHE PATENTSCHRIFT**

(45) Veröffentlichungstag und Bekanntmachung des Hinweises auf die Patenterteilung:
**06.12.2023 Patentblatt 2023/49**

(21) Anmeldenummer: **17193214.8**

(22) Anmeldetag: **26.09.2017**

(51) Internationale Patentklassifikation (IPC):
*F16J 15/06* (2006.01)  *F16J 15/3204* (2016.01)
*F16J 15/3232* (2016.01)  *F16J 15/3252* (2016.01)
*F16J 15/3296* (2016.01)  *G01M 13/00* (2019.01)

(52) Gemeinsame Patentklassifikation (CPC):
**F16J 15/064; F16J 15/3204; F16J 15/3232;
F16J 15/3252; F16J 15/3296; G01M 13/005**

(54) **DICHTUNG UND DICHTUNGSANORDNUNG**

SEAL AND SEALING ASSEMBLY

JOINT ET ENSEMBLE D'ÉTANCHÉITÉ

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **20.10.2016 DE 102016012552**

(43) Veröffentlichungstag der Anmeldung:
**25.04.2018 Patentblatt 2018/17**

(73) Patentinhaber: **Carl Freudenberg KG
69469 Weinheim (DE)**

(72) Erfinder:
• **Nahrwold, Olaf
67071 Ludwigshafen (DE)**
• **Traber, Boris
69493 Hirschberg (DE)**

• **Sindlinger, Stefan, Dr.
69469 Weinheim (DE)**
• **Kramer, Thomas
64668 Rimbach (DE)**
• **Lauer, Frank
69231 Rauenberg (DE)**
• **Geubert, Christian
64625 Bensheim (DE)**

(56) Entgegenhaltungen:
WO-A1-95/06237  WO-A1-02/093997
WO-A1-2011/019888  DE-A1-102006 001 131
DE-A1-102007 007 405  US-A1- 2006 220 498
US-A1- 2012 267 858  US-A1- 2016 186 864
US-B2- 7 086 275

EP 3 312 480 B1

**Beschreibung**

Die Erfindung betrifft eine Dichtung mit zumindest einer Dichtlippe zur Abdichtung des Spalts zwischen einem Maschinenelement und einem Gehäuse, umfassend einen Grundkörper aus elastischem Material. Die Erfindung betrifft ferner eine Dichtungsanordnung zur Abdichtung eines Spalts zwischen einem Maschinenelement und einem Gehäuse, umfassend zumindest eine Dichtung. Die Erfindung betrifft auch ein Verfahren zur Überwachung einer Dichtungsanordnung.

Stand der Technik

Dichtungen, insbesondere dynamisch beanspruchte Dichtungen nutzen sich während der vorhergesehenen Lebensdauer ab, wobei verschiedene Abnutzungsphänomene zum Tragen kommen. Durch Materialermüdung lässt die Kontaktspannung der Dichtung nach, ebenso nimmt die Anpresskraft ab. Durch Verschleiß und Setzverhalten ändern sich die Dimensionen der Dichtung. Diese Vorgänge führen dazu, dass es zunächst zu einer Leckage und anschließend zum Ausfall des Dichtsystems kommt.

Zur Leckage-Überwachung von Dichtungen ist es bekannt, in die Dichtung eine Einrichtung zur Leckage-Überwachung zu integrieren. Aus der DE 10 2007 007 405 B4 ist eine elektrische Einrichtung zur Erkennung des Verschleißzustandes eines dynamischen Dichtelements bekannt. Das Dichtelement umfasst einen elektrisch leitfähigen Abschnitt und einen elektrisch nicht-leitfähigen Abschnitt, welcher mit dem abzudichtenden Maschinenelement in Kontakt steht. Das Maschinenelement ist ebenfalls elektrisch leitfähig. Durch Verschleiß des Dichtelements nutzt sich das elektrisch nichtleitende Dichtmaterial ab, so dass das elektrisch leitende Dichtmaterial in Kontakt mit dem Maschinenelement gelangt. Dabei schließt sich ein Stromkreis und es kann ermittelt werden, dass das Dichtelement verschlissen ist. Bei dieser Ausgestaltung ist nachteilig, dass keine allmählichen Zustandsänderungen erfassbar sind. Es kann lediglich ermittelt werden, dass die Verschleißgrenze erreicht ist und dass das Dichtelement ausgetauscht werden muss.

Aufgabenstellung

Der Erfindung liegt die Aufgabe zugrunde, eine Dichtung und eine Dichtungsanordnung bereitzustellen, welche eine permanente Zustandsüberwachung der Dichtung ermöglicht. Auch soll ein Verfahren zur Zustandsüberwachung beschrieben werden.

Technische Lösung

Diese Aufgabe wird mit den Merkmalen von Anspruch 1, Anspruch 11 und Anspruch 14 gelöst. Auf vorteilhafte Ausgestaltungen nehmen die Unteransprüche Bezug.

Zur Lösung der Aufgabe ist der Grundkörper der Dichtung elektrisch leitfähig ausgerüstet und außenseitig zumindest teilweise mit einem Deckmantel aus elektrisch isolierendem Material bedeckt. Dabei folgt der Deckmantel der Außenkontur des Grundkörpers. Der Deckmantel weist dabei eine verhältnismäßig geringe Dicke auf und liegt flächig an dem Grundkörper an.

Das Messprinzip beruht darauf, dass zwischen Grundkörper der Dichtung und Maschinenelement oder zwischen Grundkörper der Dichtung und Gehäuse eine elektrische Spannung angelegt wird und die Kapazität zwischen den Bauelementen bestimmt wird. Wesentliche Einflussgrößen der elektrischen Kapazität sind die Elektrizitätskonstante des isolierenden Mediums, welches vorliegend der Deckmantel ist, sowie die Fläche des Grundkörpers relativ zu dem Maschinenelement und der Abstand zwischen Maschinenelement und Grundkörper. Ändert sich durch zunehmenden Verschleiß die Dicke des Deckmantels, ändert sich somit auch die elektrische Kapazität zwischen diesen Elementen, was durch eine geeignete Auswerteelektronik erfasst werden kann. Die Auswerteelektronik kann ein Kapazitätsmessgerät, einen Speicher und eine Ausgabe, beispielsweise Lampen; Drucker oder eine Bildschirmanzeige aufweisen. Durch eine solche Ausgestaltung sind auch allmähliche Veränderungen und allmählicher Verschleiß erfassbar. Dies ermöglicht eine permanente Zustandsüberwachung der Dichtung, der Dichtungsanordnung und der Dichtfunktion. Auf Grund der permanenten Zustandsüberwachung kann rechtzeitig vor einem Ausfall der Dichtung gewarnt und eine Leckage der Dichtungsanordnung so vermieden werden. Die erfindungsgemäße Ausgestaltung einer Dichtung ist für alle Dichtsysteme anwendbar, die durch eine dynamische Beanspruchung einem Verschleiß unterliegen. Diese Erfindung ist auch vorteilhaft gegenüber einem verschleißsensierenden System, das auf einer Kurzschlussmessung beruht. Denn bei diesem müssen die Dimensionen des Dichsystems sehr exakt auf die Dimensionsänderungen über der Zeit abgestimmt sein. Nur so wird das Signal auch wirklich kurz vor einer Leckage erzeugt. Die Einbausituation kann aber in jedem System anders sein, z.B. andere Abmaße oder andere Verpressungen, so dass jedes System mit sehr viel Aufwand aufeinander abgestimmt sein muss, da ansonsten die Leckage bereits vor Erzeugung eines Signals eintreten könnte. Vorteilhaft an der Erfindung ist, dass eine solche Abstimmung auf die Dimensionsänderung nicht notwendig ist, sondern das Dichtsystem durch die Kapazitätsmessung auf viele Anwendungen kalibrierbar ist.

Der Deckmantel kann zumindest den Bereichen des Grundkörpers zugeordnet sein, die in Kontakt mit dem Maschinenelement und dem Gehäuse stehen. Dabei kann der Deckmantel den Grundkörper außenumfangsseitig vollständig umgeben. In anderen Ausgestaltungen können auch Bereiche des Grundkörpers unbedeckt bleiben. Denkbar sind hier insbesondere die Bereiche, die in Richtung des Dichtspalts weisen und weder in Kontakt mit dem Maschinenelement noch mit dem Gehäuse gelangen. Der Deckmantel ist vorzugsweise stoffschlüssig an den Grundkörper angebunden.

Der Grundkörper besteht aus elastomeren Material. Je nach Einsatzzweck der Dichtung kommen hier insbesondere bewährte Dichtungsmaterialien wie NR, EPDM, EVM, ECO, CR, NBR, XNBR, ACM, AEM, HNBR, XHNBR, FKM und FFKM sowie Blends aus diesen Materialien in Betracht. Darüber hinaus ist auch der Einsatz thermoplastischer Elastomere sowie von Thermoplasten als Material für den Grundkörper denkbar.

Der Deckmantel besteht vorzugsweise aus einem Elastomer, einem thermoplastischem Werkstoff oder aus PTFE. Ein aus einem Elastomer ausgebildeter Deckmantel haftet aufgrund des ähnlichen Materials besonders gut stoffschlüssig an dem Grundkörper an. Ein thermoplastischer Werkstoff kann besonders einfach mittels Spritzgießen an den Grundkörper angeformt werden und haftet stoffschlüssig an dem Grundkörper an. Eine Anhaftung kann aber auch durch eine formschlüssige Verbindung hergestellt werden. In diesem Zusammenhang ist es insbesondere denkbar, die Verbindung durch mechanische Verkrallung mittels einer geometrischen Formgebung des Grundkörpers zu bilden. In beiden Fällen kann aber die Haftung auch durch einen Haftvermittler zustande kommen. Ein aus PFTE geformter Deckmantel weist eine besonders geringen Haftreibungskoeffizienten und eine hohe chemische Beständigkeit auf. Des Weiteren ist ein aus PFTE bestehender Deckmantel besonders verschleißfest. Zur Anbindung des aus PTFE bestehenden Deckmantels an den Grundkörper kommt gegebenenfalls ein Haftvermittler zum Einsatz. Auch hier ist eine formschlüssige Verbindung denkbar. Wesentlich ist jeweils, dass das Material des Deckmantels elektrisch isolierend ist, während das Material des Grundkörpers elektrisch leitfähig ist.

Das elastische Material kann mit elektrisch leitfähigen Partikeln versehen sein. In diesem Zusammenhang ist insbesondere denkbar, in das elastische Material Kohlenstoffpartikel oder Metallpartikel einzumischen. Kohlenstoffpartikel sind beispielsweise Leitruße, Graphite, Kohlenstofffasern oder Carbon Nanotubes. Metallpartikel sind beispielsweise Edelstahlfasern, Metallfasern, Metallpulver, beschichtete Metallpulver, wie beispielsweise silberbeschichtete Kupferflakes. Die Metallpartikel können auch aus Aluminium oder Eisenoxid bestehen. Sowohl Kohlenstoffpartikel als auch Metallpartikel sind elektrisch leitfähig und bewirken, dass das elastische Material des Grundkörpers insgesamt elektrisch leitfähig ist.

Der Grundkörper kann mit einem Kontaktelement zur elektrischen Kontaktierung versehen sein. Das Kontaktelement ist dabei vorzugsweise so ausgebildet, dass eine sichere elektrische Kontaktierung des Grundkörpers gegeben ist und dass die Kontaktierung möglichst widerstandsarm erfolgt. In diesem Zusammenhang ist es insbesondere denkbar, dass das Kontaktelement scheibenförmig ausgebildet ist und flächig an dem Grundkörper anliegt. Dabei gelangt das Kontaktelement vorzugsweise in den Bereich des Grundkörpers zur Anlage, der in eingebautem Zustand der Dichtung den Spalt zwischen Gehäuse und Maschinenelement zugeordnet ist und weder in Kontakt mit dem Gehäuse noch in Kontakt mit dem Maschinenelement gelangt. Alternativ kann das Kontaktelement auch in Form einer Tellerfeder ausgebildet sein.

Eine Dichtungsanordnung zur Abdichtung eines Spalts zwischen einem Maschinenelement und einem Gehäuse umfasst zumindest eine Dichtung und eine Auswerteelektronik zur Erfassung der elektrischen Kapazität zwischen dem Grundkörper der Dichtung und dem Maschinenelement oder dem Gehäuse, also der Kapazität des Deckmantels der Dichtung im Bereich des Dichtungspunktes. Die Auswerteelektronik kann ein Kapazitätsmessgerät, einen Speicher und eine Ausgabeeinrichtung, beispielsweise eine Bildschirmanzeige aufweisen.

Zumindest das Maschinenelement oder das Gehäuse ist erfindungsgemäß elektrisch leitfähig. Ob das Maschinenelement oder das Gehäuse elektisch leitfähig sein muss hängt davon ab, ob die Dichtung an dem Gehäuse oder an dem Maschinenelement angebracht ist. Ist die Dichtung an dem Gehäuse angebracht, so ist muss das Maschinenelement leitfähig sein. Ist die Dichtung an dem Maschinenelement angebracht, so muss das Gehäuse leitfähig sein. Das jeweils andere Bauelement kann dabei auch leitfähig sein. Für die Zustandsüberwachung der Dichtung, insbesondere von ihrem Verschleiß, wird zwischen Maschinenelement oder Gehäuse und Grundkörper der Dichtung eine elektrische Spannung angelegt, so dass die elektrische Kapazität bestimmbar ist. Diese wird von der Auswerteelektronik erfasst. Darüber hinaus kann die Auswerteelektronik auch allmähliche Änderungen der elektrischen Kapazität erfassen, eine sogenannte Drift der Kapazität. Die Änderungen der elektrischen Kapazität entstehen z.B. aufgrund von Dimensionsänderungen durch Abnutzung des Deckmantels.

Wird in der Auswerteelektronik eine Trendlinie der Kapazität ausgewertet, also eine Tendenz der Kapazität, so sind Voraussagen möglich, wann vorbestimmte Grenzwerte erreicht werden.

Auch kann in der Auswerteelektronik das Maß der Veränderung der Kapazität bestimmt werden, also die erste zeitliche Ableitung der Kapazität, und in die Auswertung einfließen. So kann beispielsweise bei starker Zunahme der Kapazität eine Warnung ausgegeben werden.

Die vorstehend beschriebenen Ansätze erlauben in vorteilhafter Weise eine permanente Zustandsüberwachung der Dichtungsanordnung und eine längerfristige Planung von Wartungsarbeiten.

Die Messung der Kapazität und der Rückschluss auf den Zustand der Dichtung, insbesondere den Verschleiß der Dichtung, hat den Vorteil, dass diese als Relativmessung ausgestaltet sein kann. D.h. es wird die Kapazität einer neuen Dichtung bei Montage gemessen und relativ zu diesem Messwert der Kapazität ein Grenzwert festgelegt, bei welchem der Verschleiß unzulässig groß wird. Alternativ können hinterlegte Grenzwerte abhängig von der erstmals gemessenen Kapazität kalibriert werden. Weil in beiden Fällen kein absoluter Grenzwert vorgegeben ist, sind bei der Fertigung des Deckmantels der Dichtung Toleranzen in den Chrakteristika des Deckmantels, z.B. der Dicke zulässig.

In der Auswerteelektronik sind in einem Speicher bestimmten Kapazitätsmesswerten bestimmte Zustandswerte der Dichtung, insbesondere Verschleißwerte zugeordnet. Die hinterlegten Werte können experimentell und/ oder rechnerisch bestimmt worden sein.

Zu einer Leckage können neben Verschleiß auch Materialalterung der Dichtung führen. Diese Leckage wird dann durch eine Veränderung in der isolierenden Schicht bewirkt. Dies kann insbesondere dann der Fall sein, wenn die abzudichtenden Medien das Material der Dichtung durch chemische Veränderung altern. Bemerkbar macht sich die Materialalterung auch in einem geänderten Setzverhalten der Dichtung, was unter Umständen ebenfalls zu einer Leckage führen kann. In einer vorteilhaften Weiterbildung der Dichtungsanordnung können solche Alterungsvorgänge auch gemessen werden, wobei die Auswerteelektronik dazu eine dielektrische Spektroskopie ausführt. Die dielektrische Spektroskopie ist ein Verfahren der Impedanzspektroskopie, das die dielektrischen Eigenschaften eines Materials erfasst, hier der isolierenden Schicht. Dabei wird die Impedanz, d.h. der Wechselstromwiderstand des Materials, als Funktion der Frequenz bestimmt. Die Impedanz ist ein Maß für die Alterung des Materials.

Die Erfindung kann alternativ oder zusätzlich zur reinen Messung der Kapazität also die Möglichkeit beinhalten durch Variation der Frequenz die dielektrischen Eigenschaften des Materials zu monitoren und dadurch weiterreichendere Informationen zum Materialzustand zu bekommen. Durch das angelegte elektrische Feld $E$ wird eine Verschiebung von Ladungsträgern $D$ im Material erreicht. Deren Stärke wird durch die dielektrische Konstante oder Permittivität $\varepsilon$ des Materials bestimmt.

$$D = \varepsilon\, \varepsilon_0\, E$$

Unter Anwendung eines Wechselfeldes ist $\varepsilon$ eine komplexe Größe und wird auch komplexe Permittivität $\varepsilon^*$genannt. Wie alle komplexen Größen besteht $\varepsilon^*$ aus einem Real- und einem Imaginärteil, wobei der Realteil als $\varepsilon'$ bezeichnet wird und den Teil der dielektrischen Antwort bezeichnet welcher sich in Phase mit dem angelegten Feld befindet, während $\varepsilon''$ den Imaginärteil darstellt, welcher nicht in Phase ist.

Die dielektrischen Eigenschaften eines Materials hängen direkt mit der Materialstruktur zusammen und dadurch auch mit den zugrundeliegenden Prozessen, welche die dielektrische Antwort des Materials verursachen. Die Abhängigkeit der komplexen dielektrischen Permittivität $\varepsilon^*(\omega)$ von der Kreisfrequenz $\omega$ des äußeren elektrischen Feldes sowie von Temperatur und Druck, kann mit den folgenden Mechanismen begründet werden:

1) Mikroskopische Fluktuationen von molekularen Dipolen
2) Bewegung von mobilen Ladungsträgern (Diffusion von Elektronen oder Ionen)
3) Ladungstrennung an Grenzflächen, welche zu zusätzlicher Polarisation führen

Letzteres kann zum einen im mesoskaligen Bereich an inneren Grenzflächen stattfinden (MaxwellWagner/Sillars-Polarisation) und/oder makroskopisch an der Kontaktierung zwischen Probe und äußeren Elektroden. Der Polarisationsbeitrag kann dabei um mehrere Größenordnungen die Effekte durch molekulare Mechanismen übersteigen.

Jeder der genannten Prozesse hat eine spezifische Temperatur- und Frequenzabhängigkeit des Real- und des Imaginärteils der komplexen dielektrischen Funktion und kann daher genutzt werden um den aktuellen molekularen Zustand des Materials besser zu charakterisieren. Diese zusätzliche Information kann wertvolle Informationen zur Struktur und Aufbau des molekularen Systems zu Verfügung stellen.

Bei dem beschriebenen Vorgehen sollte die angelegte Spannung möglichst niedrig sein, der Frequenzbereich wird variiert. Es werden der Real- und der Imaginärteil der komplexen dielektrischen Funktion aufgenommen, in einer anderen Ausführungsart kann auch der dielektrische Modul M als charakteristische Größe dienen. Veränderungen in den Messgrößen können durch detaillierte Auswertung mit dem Fachmann bekannten Modellfunktionen (z.B. Cole-Cole, Havriliak-Negami) klar Strukturveränderungen zugeordnet werden.

Die Dichtungsanordnung kann in vorteilhafter Weiterbildung weiterhin einen Tragkörper aufweisen, wobei der Tragkörper aus elektrisch isolierendem Material ausgebildet ist. In diesem Zusammenhang ist insbesondere denkbar, dass der Tragkörper aus thermoplastischem Kunststoff besteht. Der Tragkörper stützt einerseits den Grundkörper in dem Bauraum und verhindert andererseits, dass Bereiche des Grundkörpers mit dem Gehäuse und/oder dem Maschinenelement in Kontakt gelangen, die nicht mit dem Deckmantel bedeckt sind.

Der Tragkörper ist vorzugsweise mit einer Einrichtung zur elektrischen Verbindung des Kontaktelements mit einer Auswerteelektronik versehen. Dabei wird eine elektrische Verbindung einerseits mit den Kontaktelementen des Grundkörpers hergestellt, was über eine kraftschlüssige Anlage eines elektrisch leitfähigen Abschnitts des Tragkörpers erfolgen kann und andererseits mit der Auswerteelektronik. Dazu kann der Tragkörper beispielsweise mit Anschlussfahnen versehen sein, welche ein einfaches Verbinden mit Kabelschuhen einer Verkabelung ermöglicht.

In einer vorteilhaften Ausgestaltung weist die Dichtungsanordnung zwei Dichtungen auf, die jeweils einer axialen Stirnseite des Tragkörpers zugeordnet sind, sodass die Dichtungsanordnung bidirektional dichtet. Eine derartige Dichtungsanordnung ist besonders vorteilhaft, wenn die Dichtungsanordnung eine Stangendichtung ist. In diesem Fall ist das Gehäuse beispielsweise ein Zylindergehäuse und die Stange ein Kolben. Die Dichtungsanordnung dichtet den mit einem Medium befüllten Spalt ab. Die Wahl des Mediums hängt von dem jeweiligen Einsatzzweck ab und kann Schmierstoffmedien wie Getriebeflüssigkeiten und Hydraulikflüssigkeiten umfassen. Denkbar sind aber auch Medien der Lebensmitteltechnik, insbesondere im Bereich der Abfülltechnik bekannte Medien wie Milch, Limonade, Bier und deren Reinigungsmedien, sogenannte CIP/SIP Reinigungsmedien.

Die erfindungsgemäße Dichtungsanordnung mit permanenter Zustandsüberwachung und Leckage-Überwachung ist aber generell vorteilhaft in allen dynamischen Dichtungssystemen mit einer ausgeformten Dichtlippe. Hierunter sind vor allem Dichtungen zu fassen, die mindestens eine definierte Dichtlippe aufweisen, wie bei Radialwellendichtungen. Die Dichtung kann aber auch als Profildichtung, Klappendichtung oder X-Ring ausgebildet sein.

Die Erfindung betrifft auch ein Verfahren zur Überwachung einer Dichtungsanordnung, wie sie obenstehend beschrieben ist, wobei das Verfahren die nachfolgenden Schritte aufweist:

In einem ersten Schritt erfolgt die Messung der Kapazität, je nach Aufbau der Dichtungsanordnung zwischen dem Grundkörper und dem Maschinenelement oder zwischen dem Grundkörper und dem Gehäuse mit einem Kapazitätsmessgerät. Sodann erfolgt der Abgleich des Messwertes mit mindestens einem in einem Speicher hinterlegten Grenzwert. Wird mindestens ein Grenzwert überschritten, so erfolgt in einem dritten Schritt die Ausgabe einer Information mittels einer Ausgabeeinrichtung, wobei einem jeweiligen Grenzwert eine jeweilige Information zugeordnet sein kann. Dabei kann insbesondere ein erster Grenzwert vorgesehen sein, bei welchem eine Bestellaufforderung ausgegeben wird zur Bestellung einer neuen Dichtung, es kann ein zweiter Grenzwert vorgesehen sein, bei welchem eine Austauschaufforderung ausgegeben wird zum Austausch der Dichtung und/oder es kann ein dritter Grenzwert vorgesehen sein, bei welchem eine Abschaltaufforderung ausgegeben wird, um einen Totalausfall der Dichtung und eventuell kritische Folgen zu vermeiden.

Für die Messung mittels dielektrischer Spektroskopie kann das Verfahren analog angewandt werden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Diese zeigen, jeweils schematisch:

Fig. 1 eine Dichtung im Schnitt;

Fig. 2 eine bidirektionale Dichtungsanordnung;

Fig. 3 eine monodirektionale Dichtungsanordnung;

Fig. 4 den Tragkörper;

Fig. 5 einen Radialwellendichtring

Fig. 6 die Dichtung aus Fig. 1 mit einer schematisch angedeuteten Auswerteelektronik

Fig. 7 die Dichtunganordnung aus Fig. 2 mit einer schematisch angedeuteten Auswerteelektronik

Fig. 8 eine Dichtunganordnung mit Kompaktdichtung mit einer schematisch angedeuteten Auswerteelektronik

Fig. 9 eine Darstellung von Verschleiß und Kapazität im Zeitverlauf.

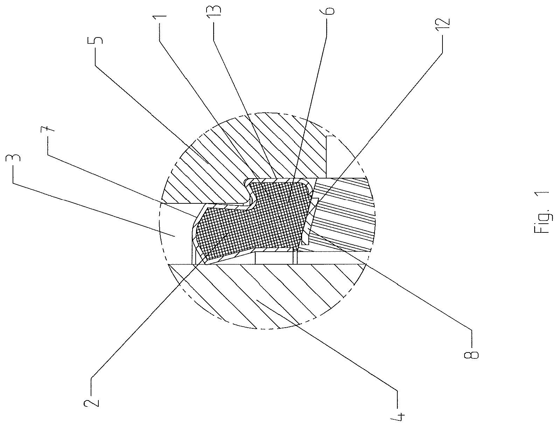

Figur 1 zeigt eine Dichtung 1 mit einer Dichtlippe 2 zur Abdichtung eines Spalts 3 zwischen einem Maschinenelement 4 und einem Gehäuse 5. Die Dichtlippe 2 liegt mit radialer Vorspannung dichtend an dem Maschinenelement 4 an. Außenumfangsseitig ist die Dichtung 1 in einer umlaufenden Nut 13 des Gehäuses 5 aufgenommen und ortsfest in dem Gehäuse 5 fixiert.

Die Dichtung 1 umfasst einen Grundkörper 6 aus elastischem Material, ausgebildet aus elastomerem Material, in diesem Ausführungsbeispiel aus EPDM. Der Grundkörper 6 ist mit elektrisch leitfähigen Partikeln in Form von Leitruß elektrisch leitfähig ausgerüstet. Der spezifische elektrische Durchgangswiderstand des mit leitfähigen Partikeln ausgerüsteten Grundkörpers 6, bestimmt gemäß DIN IEC 60093, beträgt zwischen 1E+01 $\Omega \times cm^2/cm$ und 1E+07 $\Omega \times cm^2/cm$. Ein beispielhafter aus EPDM bestehender Grundkörper 6 weist einen Durchgangswiderstand von 7,3E+03 $\Omega$ und einen spezifischen Durchgangswiderstand von 7,3E+05 $\Omega \times cm^2/cm$ auf.

Der Grundkörper 6 ist außenseitig teilweise mit einem Deckmantel 7 aus elektrisch isolierendem Material bedeckt. In diesem Ausführungsbeispiel besteht der Deckmantel 7 aus PTFE und ist über einen Haftvermittler stoffschlüssig an den Grundkörper 6 angebunden. Dabei ist der Deckmantel 7 den Bereichen des Grundkörpers 6 zugeordnet, die in Kontakt mit dem Maschinenelement 4 und dem Gehäuse 5 stehen. Die Dicke des Deckmantels 7 beträgt vorliegend 0,5 mm. Denkbar ist eine Dicke zwischen 0,01 mm und 1 mm, vorzugsweise zwischen 0,1 mm und 0,6 mm. Ein Abschnitt 12 an der axialen Stirnseite des Grundkörpers 6, dem Spalt 3 zugewandt, ist nicht von dem Deckmantel 7 bedeckt. Im Hinblick auf die geringe Schichtdicke im Bereich von 0,01 mm ist prinzipiell denkbar, dass der Deckmantel 7 aus einer Beschichtung, beispielsweise in Form eines Gleitlacks ausgebildet ist.

Der Grundkörper 6 ist mit einem Kontaktelement 8 zur elektrischen Kontaktierung versehen. Das Kontaktelement 8 ist in Form einer Tellerfeder geformt und liegt an dem von dem Deckmantel 7 unbedeckten Abschnitt 12 an dem Grundkörper 6 an.

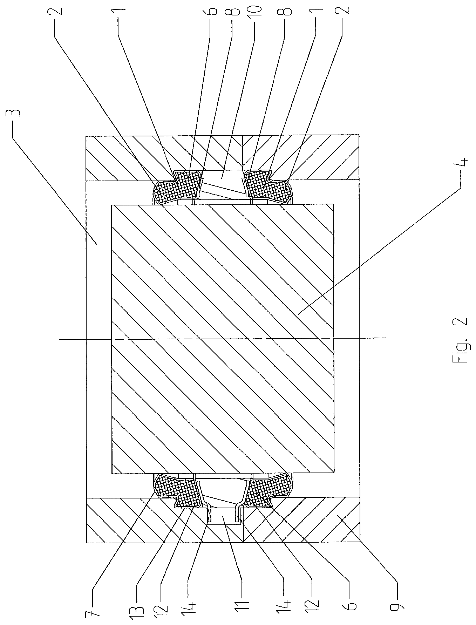

Figur 2 zeigt eine Dichtungsanordnung 9 zur Abdichtung eines Spalts 3 zwischen einem Maschinenelement 4 und einem Gehäuse 5. In dieser Ausgestaltung ist die Dichtungsanordnung als Stangendichtung ausgebildet. Das Gehäuse 5 ist ein Zylindergehäuse und das Maschinenelement ist eine Stange, beziehungsweise ein Kolben. Die Dichtungsanordnung 9 dichtet den mit einem Medium gefüllten Spalt 3. Die Dichtungsanordnung 9 ist vorliegend als bidirektionale Dichtungsanordnung 9 ausgebildet und weist zwei Dichtungen 1 gemäß Figur 1 auf, wobei die Dichtlippen 2 in entgegengesetzte Axialrichtungen weisen. Die beiden Dichtungen 1 stützen sich an einem in der Nut 13 angeordneten Tragkörper 10 ab. Dabei sind die Dichtungen 1 einer axialen Stirnseite 12 des Tragkörpers 10 zugeordnet. Der Tragkörper 10 ist aus elektrisch isolierendem Material ausgebildet.

Der Tragkörper 10 ist mit einer Einrichtung 11 zur elektrischen Verbindung des Kontaktelements 8 mit einer Auswerteelektronik versehen ist. Dabei steht die Einrichtung 11 in elektrisch leitender Verbindung mit dem Kontaktelement 8 und weist radial nach außen abragende Verbindungselemente 14 in Form von Kontaktfahnen auf.

Das Maschinenelement 4 und zumindest ein Teil des Gehäuses 5 sind elektrisch leitfähig, wobei die Auswerteelektronik die elektrische Kapazität zwischen dem Grundkörper 6 und dem Maschinenelement 4 und/oder zwischen dem Grundkörper 6 und dem Gehäuse 5 erfasst.

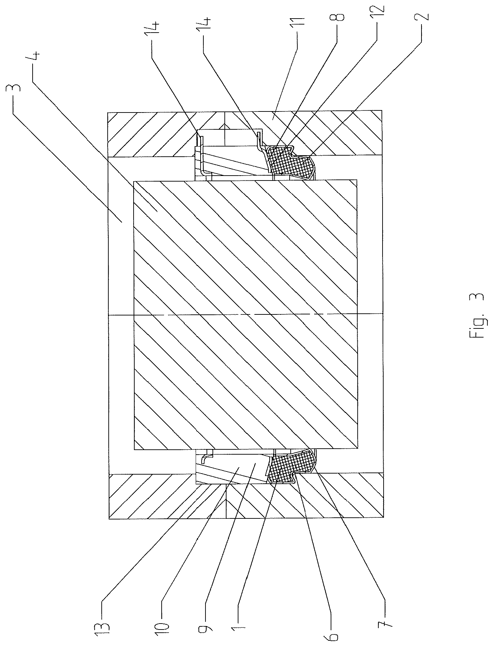

Figur 3 zeigt die Dichtungsanordnung 9 gemäß Figur 2. Bei dieser Ausgestaltung ist jedoch lediglich eine Dichtung 1 vorgesehen, so dass die Dichtungsanordnung eine monodirektionale Dichtungsanordnung 9 ist. Diese Ausgestaltung ist besonders geeignet als Radialwellendichtung.

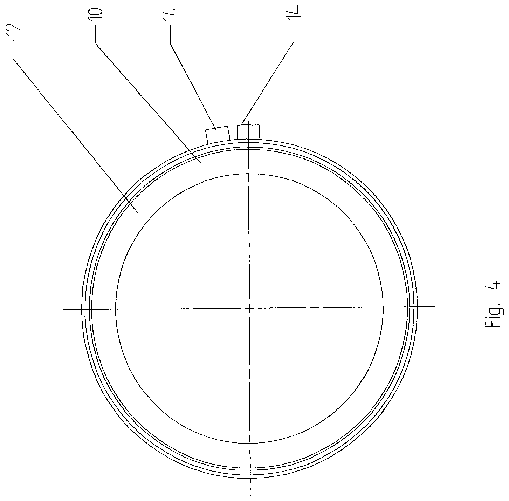

Figur 4 zeigt im Detail den Tragkörper 10 mit den Verbindungselementen 14.

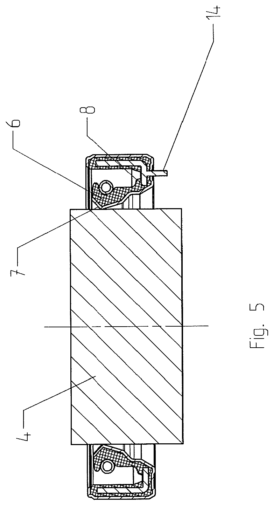

In einer alternativen Ausgestaltung ist die Dichtungsanordnung 9 eine Radialwellendichtung 1. Bei dieser Ausgestaltung findet die Abdichtung um eine rotierende Welle statt. Dabei kann die Dichtlippe 2 mit einem Deckmantel 7 ausgestattet sein, welcher sich im Verlauf der Lebensdauer abträgt und den leitfähigen Grundkörper 6 zur Anlage an die Welle 4 bringt. Ein derartiger Radialwellendichtring 1 ist in Figur 5 gezeigt.

Eine weitere alternative Ausführungsform sieht einen nicht-elastomeren Sensorkörper, umfassend einen Deckmantel 7 und einen Grundkörper 6, welche aus nicht-elastomerem Material bestehen, vor. Der Sensorkörper wirkt zusammen mit Anpresselementen, beispielsweise einen Stütz-O-Ring oder anderen elastomeren Anpresselementen, welche die Anpressung bewirken.

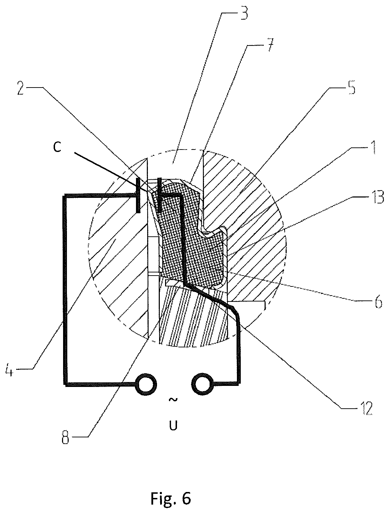

In Figur 6 ist die Dichtung aus Figur 1 mit einer schematisch angedeuteten Auswerteelektronik dargestellt.

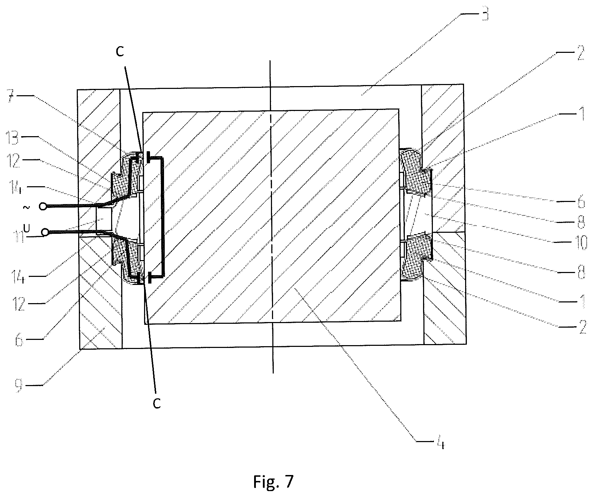

In Figur 7 ist die Dichtunganordnung aus Figur 2 mit einer schematisch angedeuteten Auswerteelektronik dargestellt.

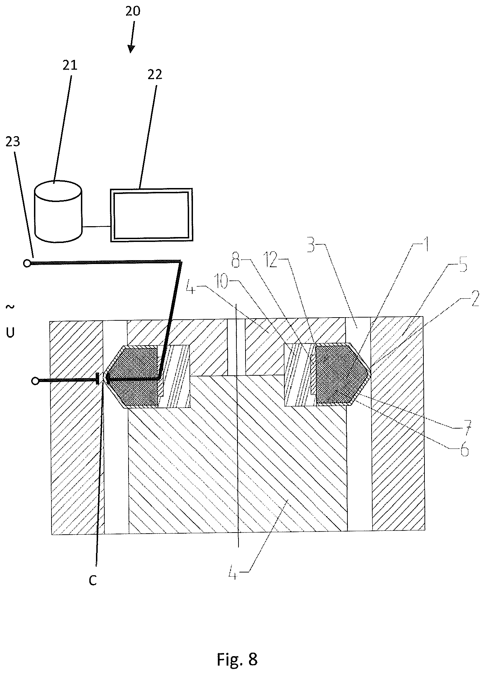

Figur 8 zeigt eine Dichtung 1 mit einer Dichtlippe 2 zur Abdichtung eines Spalts 3 zwischen einem Maschinenelement 4 und einem Gehäuse 5. Die Dichtlippe 2 liegt dichtend an dem Gehäuse 5 an. Innenumfangsseitig ist die Dichtung 1 in einer Ausnehmung des Maschinenelements 4 aufgenommen und ortsfest in dem Maschinenelement 4 fixiert.

Die Dichtung 1 umfasst einen Grundkörper 6 aus elastischem Material und ist mit elektrisch leitfähigen Partikeln ausgerüstet. Der Grundkörper 6 ist außenseitig teilweise mit einem Deckmantel 7 aus elektrisch isolierendem Material bedeckt.

In den Figuren 6 und 7 ist jeweils der Messkreis einer Auswerteelektronik 20 angedeutet, welche wie im Ausführungsbeispiel von Figur 8 ausgeführt sein kann. Die Auswerteelektronik 20 umfasst ein Kapazitätsmessgerät 23 mit einer Wechselspannungsquelle U. An die Dichtungsanordnung 9 wird eine Wechselspannung U angelegt und die Kapazität C im Bereich des Dichtungspunktes ermittelt. Die Auswerteelektronik 20 umfasst weiter einen Speicher 21, in welchem mindestens ein Grenzwert abgespeichert ist und eine Ausgabeeinrichtung 22, beispielsweise farbige Leutelemente wie LEDs, einen Drucker oder einen Bildschirm, zur Ausgabe von Informationen. Kapazitsmessgerät 23, Speicher 21 und Ausgabeeinrichtung 22 sind datenübertragungstechnisch miteinander verbunden. Die Ausgabeeinrichtung 22 kann auch als Datenanbindung an einen Server ausgeführt sein, durch welchen die Messwerte aufbereitet und eine Information unter Nutzung allgemein bekannter Kommunikationsmittel wie E-Mail, Kurznachricht oder App verschickt wird. Durch die Information kann einem Maschinenbediener oder Maschinenverantwortlichen eine Handlungsanweisung übermittelt werden, beispielsweise eine neue Dichtung zu bestellen, die Dichtung auszutauschen oder im Fall von Sicherheitsrisiken die Maschine, in welcher die Dichtungsanordnung eingesetzt wird, herunter zu fahren. Durch die Anbindung an einen Server sind auch im Rahmen von Industrie 4.0 bekannten Anwendungen möglich, wie die automatische Bestellung von Ersatzteilen, die automatische Terminierung von Wartungseinsätzen, etc. Auch könnte der Verschleiß über den Lauf der Zeit in Beziehung zu anderen Maschinendaten gesetzt werden, welche die Maschine liefert, in der die Dichtungsanordnung eingesetzt wird. Basierend auf einer solchen Auswertung könnte z.B. eine Optimierung der Dichtungsanordnung oder eine Anpassung der Betriebsbedingungen der Maschine erfolgen.

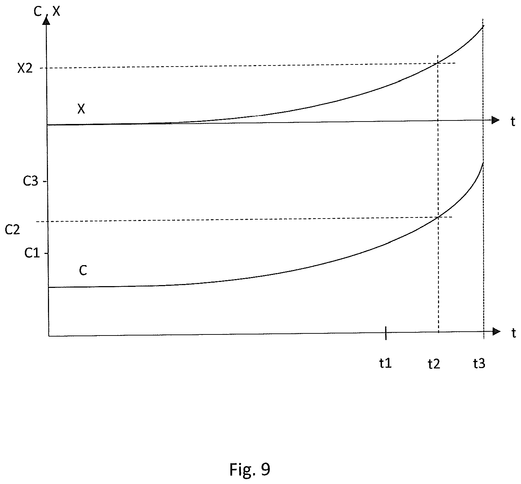

In Figur 9 ist der Zusammenhang zwischen der in einer Dichtungsanordnung 9 gemessenen Kapazität C und dem auftretenden Verschleiß X eines Deckmantels 7 im Bereich einer Dichtlippe 2 einer Dichtung 1 über den Verlauf der Zeit t dargestellt. In der unteren Kurve ist die Kapazität C aufgetragen und in der oberen Kurve ist der Verschleiß X aufgetragen. Aufgrund des direkten Zusammenhangs zwischen der Kapazität C und dem Verschleiß X kann von einer gemessenen Kapazität C auf einen tatsächlichen Verschleiß X geschlossen werden.

Bei Montage einer neuen Dichtung 1 wird zum Zeitpunkt t=0 ein Kapazitäts-Startwert C gemessen. Zu diesem Zeitpunkt t=0 liegt noch kein Verschleiß X vor und es gilt X=0. Die Messung der Kapazität C kann kontinuierlich oder quasi-kontinuierlich, d. h. in einem festen Takt, erfolgen. Alternativ kann die Messung zu bestimmten Zeitpunkten ti erfolgen, welche vorab, abhängig vom Aufbau und Einsatz der Dichtung und der Dichtungsanordnung, festgelegt werden können. Nach jeder Messung der Kapazität C erfolgt ein Abgleich des Messwertes mit in einem Speicher 21 der Auswerteelektronik 20 hinterlegten Grenzwerten. So kann ein erster Grenzwert C1 festgelegt sein, welcher im dargestellten Beispiel zum Zeitpunkt t1 erreicht wird. Nach erfolgtem Abgleich kann eine Information ausgegeben werden, dass aufgrund eines bereits fortgeschrittenen Verschleißes X der Dichtung 1, eine neue Dichtung 1 bestellt werden sollte. Alternativ oder zusätzlich zur bloßen Ausgabe der Information kann auch direkt eine neue Dichtung 1 bestellt werden. Zu einem späteren Zeitpunkt t2 wird ein zweiter Grenzwert C2 erreicht, welchem ein kritischer Verschleißzustand X2 entspricht. Bei diesem fortgeschrittenen Verschleiß X2 kann eine Information ausgegeben werden, dass ein Austausch der Dichtung 1 erfolgen sollte. Alternativ oder zusätzlich zur bloßen Ausgabe der Information kann auch direkt ein Reparaturauftrag an einen bekannten und benannten Servicedienstleister veranlasst werden. Erfolgt kein Austausch der Dichtung 1 so wird zu einem späteren Zeitpunkt t3 ein dritter Grenzwert C3 erreicht, zu welchem der Verschleiß X auf ein hochkritisches und risikobehaftetes Maß vorangeschritten ist. Nach Auswertung des Messwertes kann eine Information ausgegeben werden, dass die Dichtungsanordnung 9 so nicht mehr weiter betrieben werden sollte. Alternativ und/oder zusätzlich könnte die Auswerteelektronik 20 zu ihrem Schutz abgeschaltete werden. Sollten Sicherheitsrisiken beim Weiterbetrieb der Dichtungsanordnung 9 bestehen, so könnte die Maschine, in welcher die Dichtungsanordnung 9 eingesetzt wird, auch kontrolliert heruntergefahren werden. Die Grenzwerte C1 und C3 werden als fakultativ angesehen. Der Grenzwert C2 sollte jedenfalls vorhanden sein.

## Patentansprüche

1.  Dichtungsanordnung (9) abdichtend einen Spalt (3) zwischen einem Maschinenelement (4) und einem Gehäuse (5), wobei zumindest das Maschinenelement (4) oder zumindest ein Teil des Gehäuses (5) elektrisch leitfähig ist, umfassend zumindest das Maschinenelement, das Gehäuse und eine Dichtung (1) mit zumindest einer Dichtlippe (2) abdichtend den Spalt (3) zwischen dem Maschinenelement (4) und dem Gehäuse (5), umfassend einen Grundkörper (6) aus elastischem, elastomeren Material, wobei der Grundkörper (6) elektrisch leitfähig ausgerüstet und außenseitig zumindest teilweise mit einem Deckmantel (7) aus elektrisch isolierendem Material bedeckt ist, wobei der Deckmantel (7) zumindest den Bereichen des Grundkörpers (6) zugeordnet ist, die in Kontakt mit dem Maschinenelement (4) und dem Gehäuse (5) stehen, und wobei eine Auswerteelektronik (20) vorgesehen ist, die die elektrische Kapazität (C) zwischen dem Grundkörper (6) und dem Maschinenelement (4) oder dem Gehäuse (5) erfasst.

2.  Dichtungsanordnung nach Anspruch 1, wobei das elastische Material mit elektrisch leitfähigen Partikeln versehen ist.

3.  Dichtungsanordnung nach einem der vorangehenden Ansprüche, wobei der Grundkörper (6) mit einem Kontaktelement (8) zur elektrischen Kontaktierung versehen ist.

4.  Dichtungsanordnung nach einem der vorangehenden Ansprüche, wobei die Auswerteelektronik (20) ein Kapazitätsmessgerät (23), einen Speicher (21) und eine Ausgabeeinrichtung (22) aufweist.

5.  Dichtungsanordnung nach einem der vorangehenden Ansprüche, wobei diese einen Tragkörper (10) besitzt, wobei der Tragkörper (10) aus elektrisch isolierendem Material ausgebildet ist.

6.  Dichtungsanordnung nach Anspruch 5 wobei der Tragkörper (10) mit einer Einrichtung (11) zur elektrischen Verbindung des Kontaktelements (8) mit der Auswerteelektronik versehen ist.

7.  Dichtungsanordnung nach einem der Ansprüche 5 bis 6, wobei die Dichtungsanordnung (9) zwei Dichtungen (1) aufweist, die jeweils einer axialen Stirnseite (12) des Tragkörpers (10) zugeordnet sind, so dass die Dichtungsanordnung (9) bidirektional dichtet.

8. Dichtungsanordnung nach einem der vorangehenden Ansprüche, wobei die Dichtungsanordnung (9) eine Stangendichtung ist.

9. Dichtungsanordnung nach einem der vorangehenden Ansprüche , wobei die Dichtungsanordnung (9) eine Radialwellendichtung ist.

10. Dichtungsanordnung nach einem der Ansprüche 8 oder 8 und 9, wobei die Dichtungsanordnung (9) eine Stangenkompaktdichtung ist.

11. Verfahren zur Überwachung einer Dichtungsanordnung (9) nach einem der Ansprüche 4 bis 10 , jedoch stets einschließlich der Merkmale des Anspruchs 4, mit nachfolgenden Schritten:

> a) Messung der Kapazität (C) zwischen dem Grundkörper (6) und dem Maschinenelement (4) oder dem Gehäuse (5) mit dem Kapazitätsmessgerät (23)
> b) Abgleich des Messwertes (C) mit mindestens einem in dem Speicher (21) hinterlegten Grenzwert (C1, C2, C3),
> wobei die Schritte a) und b) in definierten Zeitabständen wiederholt werden
> c) Ausgabe einer Information mittels der Ausgabeeinrichtung (22) wenn mindestens ein Grenzwert (C1, C2, C3) überschritten wird.

12. Verfahren zur Überwachung einer Dichtungsanordnung nach Anspruch 11, wobei vor erster Durchführung des Schrittes a) eine Kalibrierung des Kapazitätsmessgeräts (23) erfolgt.

13. Verfahren zur Überwachung einer Dichtungsanordnung nach Anspruch 11 oder 12, wobei ein erster Grenzwert (C1) vorgesehen ist, bei welchem in Schritt c) eine Bestellaufforderung ausgegeben wird und/oder dass ein zweiter Grenzwert (C2) vorgesehen ist, bei welchem in Schritt c) eine Austauschaufforderung ausgegeben wird und/oder dass ein dritter Grenzwert (C3) vorgesehen ist, bei welchem in Schritt c) eine Abschaltaufforderung ausgegeben wird.

14. Dichtungsanordnung (9) abdichtend einen Spalt (3) zwischen einem Maschinenelement (4) und einem Gehäuse (5), wobei zumindest das Maschinenelement (4) oder zumindest ein Teil des Gehäuses (5) elektrisch leitfähig ist umfassend zumindest das Maschinenelement, das Gehäuse und eine Dichtung mit zumindest einer Dichtlippe (2) abdichtend den Spalt (3) zwischen dem Maschinenelement (4) und dem Gehäuse (5), umfassend einen Grundkörper (6) aus elastischem, elastomeren Material, wobei der Grundkörper (6) elektrisch leitfähig ausgerüstet und außenseitig zumindest teilweise mit einem Deckmantel (7) aus elektrisch isolierendem Material bedeckt ist, wobei der Deckmantel (7) zumindest den Bereichen des Grundkörpers (6) zugeordnet ist, die in Kontakt mit dem Maschinenelement (4) und dem Gehäuse (5) stehen, wobei eine Auswerteelektronik (20) vorgesehen ist, die die dielektrischen Eigenschaften des Deckmantels (7) mittels dielektrischer Spektroskopie erfasst.

**Claims**

1. Sealing arrangement (9) sealing off a gap (3) between a machine element (4) and a housing (5), wherein at least the machine element (4) or at least a part of the housing (5) is electrically conductive, comprising at least the machine element, the housing and a seal (1) with at least one sealing lip (2), which seals off the gap (3) between the machine element (4) and the housing (5), comprising a main body (6) composed of elastic elastomeric material, wherein the main body (6) is electrically conductive and, at the outside, is covered at least partially by a covering shell (7) composed of electrically insulating material, wherein the covering shell (7) is assigned at least to those regions of the main body (6) which are in contact with the machine element (4) and with the housing (5), and wherein provision is made of evaluation electronics (20) which detect the electrical capacitance (C) between the main body (6) and the machine element (4) or the housing (5).

2. Sealing arrangement according to Claim 1, wherein the elastic material is provided with electrically conductive particles.

3. Sealing arrangement according to one of the preceding claims, wherein the main body (6) is provided with a contact element (8) for electrical contacting.

4. Sealing arrangement according to one of the preceding claims, wherein the evaluation electronics (20) has a capacitance-measuring device (23), a memory (21) and an output device (22).

5. Sealing arrangement according to one of the preceding claims, wherein said sealing arrangement has a supporting body (10), wherein the supporting body (10) is formed from electrically insulating material.

6. Sealing arrangement according to Claim 5, wherein the supporting body (10) is provided with a device (11) for electrical connection of the contact element (8) to the evaluation electronics.

7. Sealing arrangement according to one of Claims 5 or 6,
wherein the sealing arrangement (9) has two seals (1) which are each assigned to an axial end face (12) of the supporting body (10) such that the sealing arrangement (9) provides bidirectional sealing.

8. Sealing arrangement according to one of the preceding claims,
wherein the sealing arrangement (9) is a rod seal.

9. Sealing arrangement according to one of the preceding claims,
wherein the sealing arrangement (9) is a radial shaft seal.

10. Sealing arrangement according to one of Claims 8 or 8 and 9,
wherein the sealing arrangement (9) is a rod compact seal.

11. Method for monitoring a sealing arrangement (9) according to one of Claims 4 to 10, but in all cases including the features of Claim 4, comprising the following steps:

a) measuring the capacitance (C) between the main body (6) and the machine element (4) or the housing (5) using the capacitance-measuring device (23);
b) comparing the measurement value (C) with at least one limit value (C1, C2, C3) stored in the memory (21),
wherein steps a) and b) are repeated at defined time intervals;
c) outputting a piece of information by means of the output device (22) if at least one limit value (C1, C2, C3) is exceeded.

12. Method for monitoring a sealing arrangement according to Claim 11,
wherein, prior to step a) being carried out for the first time, the capacitance-measuring device (23) is calibrated.

13. Method for monitoring a sealing arrangement according to Claim 11 or 12,

wherein provision is made of a first limit value (C1) for which an order request is output in step c), and/or
provision is made of a second limit value (C2) for which an exchange request is output in step c), and/or
provision is made of a third limit value (C3) for which a deactivation request is output in step c).

14. Sealing arrangement (9) sealing off a gap (3) between a machine element (4) and a housing (5), wherein at least the machine element (4) or at least a part of the housing (5) is electrically conductive, comprising at least the machine element, the housing and a seal with at least one sealing lip (2), which seals off the gap (3) between the machine element (4) and the housing (5), comprising a main body (6) composed of elastic elastomeric material, wherein the main body (6) is electrically conductive and, at the outside, is covered at least partially by a covering shell (7) composed of electrically insulating material, wherein the covering shell (7) is assigned at least to those regions of the main body (6) which are in contact with the machine element (4) and with the housing (5), wherein provision is made of evaluation electronics (20) which detect the dielectric properties of the covering shell (7) by means of dielectric spectroscopy.

**Revendications**

1. Ensemble d'étanchéité (9) réalisant l'étanchéité d'un interstice (3) entre un élément de machine (4) et un boîtier (5), au moins l'élément de machine (4) ou au moins une partie du boîtier (5) étant électroconducteur/trice, comprenant au moins l'élément de machine, le boîtier et un joint d'étanchéité (1) comportant au moins une lèvre d'étanchéité (2) réalisant l'étanchéité de l'interstice (3) entre l'élément de machine (4) et le boîtier (5), comprenant un corps de base (6) constitué d'une matière élastique élastomère, le corps de base (6) étant équipé de manière électroconductrice et étant recouvert, du côté extérieur, au moins partiellement par une enveloppe de recouvrement (7) constituée d'une matière électriquement isolante, l'enveloppe de recouvrement (7) étant associée au moins aux régions du corps de base (6) qui sont en contact avec l'élément de machine (4) et le boîtier (5), et une électronique d'évaluation (20) étant prévue, laquelle détecte la capacité électrique (C) entre le corps de base (6) et l'élément de machine (4) ou le boîtier (5).

2. Ensemble d'étanchéité selon la revendication 1, la matière élastique étant dotée de particules électroconductrices.

3. Ensemble d'étanchéité selon l'une des revendications précédentes, le corps de base (6) étant doté d'un élément de contact (8) servant à la mise en contact électrique.

4. Ensemble d'étanchéité selon l'une des revendications précédentes, l'électronique d'évaluation (20) présentant un appareil de mesure de capacité (23), une mémoire (21) et un dispositif de sortie (22).

**5.** Ensemble d'étanchéité selon l'une des revendications précédentes, celui-ci possédant un corps de support (10), le corps de support (10) étant formé à partir d'une matière électriquement isolante.

**6.** Ensemble d'étanchéité selon la revendication 5, le corps de support (10) étant doté d'un dispositif (11) servant à la connexion électrique de l'élément de contact (8) à l'électronique d'évaluation.

**7.** Ensemble d'étanchéité selon l'une des revendications 5 et 6, l'ensemble d'étanchéité (9) présentant deux joints d'étanchéité (1) qui sont associés respectivement à un côté frontal axial (12) du corps de support (10), de sorte que l'ensemble d'étanchéité (9) réalise l'étanchéité de manière bidirectionnelle.

**8.** Ensemble d'étanchéité selon l'une des revendications précédentes, l'ensemble d'étanchéité (9) étant un joint d'étanchéité de tige.

**9.** Ensemble d'étanchéité selon l'une des revendications précédentes, l'ensemble d'étanchéité (9) étant un joint d'étanchéité d'arbre radial.

**10.** Ensemble d'étanchéité selon l'une des revendications 8 ou 8 et 9, l'ensemble d'étanchéité (9) étant un joint d'étanchéité de tige compact.

**11.** Procédé de surveillance d'un ensemble d'étanchéité (9) selon l'une des revendications 4 à 10, mais toujours y compris les caractéristiques de la revendication 4, comprenant les étapes suivantes :

a) mesure de la capacité (C) entre le corps de base (6) et l'élément de machine (4) ou le boîtier (5) à l'aide de l'appareil de mesure capacité (23),
b) comparaison de la valeur de mesure (C) avec au moins une valeur limite (C1, C2, C3) enregistrée dans la mémoire (21),
les étapes a) et b) étant répétées à des intervalles définis,
c) délivrance d'une information au moyen du dispositif de sortie (22) lorsqu'au moins une valeur limite (C1, C2, C3) est dépassée.

**12.** Procédé de surveillance d'un ensemble d'étanchéité selon la revendication 11, dans lequel, avant la première mise en œuvre de l'étape a), un étalonnage de l'appareil de mesure de capacité (23) est effectué.

**13.** Procédé de surveillance d'un ensemble d'étanchéité selon la revendication 11 ou 12, dans lequel une première valeur limite (C1) est prévue, à laquelle à l'étape c) une demande de commande est émise et/ou une deuxième valeur limite (C2) est prévue, à laquelle à l'étape c) une demande de remplacement est émise et/ou une troisième valeur limite (C3) est prévue, à laquelle à l'étape c) une demande d'arrêt est émise.

**14.** Ensemble d'étanchéité (9) réalisant l'étanchéité d'un interstice (3) entre un élément de machine (4) et un boîtier (5), au moins l'élément de machine (4) ou au moins une partie du boîtier (5) étant électroconducteur/trice, comprenant au moins l'élément de machine, le boîtier et un joint d'étanchéité comportant au moins une lèvre d'étanchéité (2) réalisant l'étanchéité de l'interstice (3) entre l'élément de machine (4) et le boîtier (5), comprenant un corps de base (6) constitué d'une matière élastique élastomère, le corps de base (6) étant équipé de manière électroconductrice et étant recouvert, du côté extérieur, au moins partiellement par une enveloppe de recouvrement (7) constituée d'une matière électriquement isolante, l'enveloppe de recouvrement (7) étant associée au moins aux régions du corps de base (6) qui sont en contact avec l'élément de machine (4) et le boîtier (5), une électronique d'évaluation (20) étant prévue, laquelle détecte les propriétés diélectriques de l'enveloppe de recouvrement (7) par spectroscopie diélectrique.

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007007405 B4